# EUROPEAN PATENT SPECIFICATION

(11) **EP 1 863 106 B1**
(45) Date of publication and mention of the grant of the patent: **23.12.2009**
(21) Application number: 06114867.2
(22) Date of filing: 01.06.2006
(51) Int. Cl.: H01M 2/10, B05B 9/08

(54) **Sprayer with detachable rechargeable battery**
Zerstäuber mit einer lösbaren aufladbaren Batterie
Pulvérisateur pourvu d'une batterie rechargeable et détachable

(43) Date of publication of application: 05.12.2007
(73) Proprietor: Wu, Scott, Wu Feng Hsiang T'ai chung Hsien (TW)
(72) Inventor: Wu, Scott, Wu Feng Hsiang T'ai chung Hsien (TW)
(74) Representative: Viering, Jentschura & Partner

(56) References cited:
- EP-A- 1 422 768
- WO-A-01/76048
- US-A- 5 716 007
- US-A- 5 792 573
- US-A1- 2005 006 400

## Description

### BACKGROUND OF INVENTION

### 1. FIELD OF INVENTION

The present invention relates to a sprayer comprising a container for containing water, the container comprises two tracks formed thereon, and a battery comprising two contacts formed thereon and two flanges.

### 2. RELATED PRIOR ART

Disclosed in US Patent No. 6651907 is a conventional sprayer 10 including a container 22, a hose 26 in communication of water with the container 22, a nozzle 24 in communication of water with the hose 26 and a pump 44 including wiring 50 connected to a cord 30. The cord 30 is formed with a plug 28 for connection to a power port 60 of a vehicle. Thus, the motor 44 can be energized by a battery of the vehicle.

This conventional sprayer 10 can only be used near the vehicle since it is connected to the vehicle through the cord 30. This conventional sprayer 10 is useless in the wild where the vehicle cannot reach.

US-A-5,792,573 discloses the arrangement of a battery pack at the bottom of an orthopedic surgical instrument.

A sprayer comprising a container for containing water, a container comprising the tracks formed thereon, and a battery comprising the contacts formed thereon and two flanges is disclosed in document US 2005/0006400 A1.

The present invention is therefore intended to obviate or at least alleviate the problems encountered in prior art. The problem to be solved by the present invention is to provide a solution, which allows to equip the container or the sprayer as to realize good electrical connections between the container and a detachable battery.

### SUMMARY OF INVENTION

This problem is solved by a sprayer according to claim 1.

According to the present invention, a sprayer includes a container and a battery. The container contains water. The container includes two tracks formed thereon and two elastic contacts installed thereon. The battery includes two contacts formed thereon and two flanges for engagement with the tracks so that the battery is attached to the container and that the contacts of the battery contact the elastic contacts of the container.

The primary advantage of the sprayer of the present invention is that it can be used both near and far from a vehicle for using the battery.

Other advantages and features of the present invention will become apparent from the following description referring to the drawings.

### BRIEF DESCRIPTION OF DRAWINGS

The present invention will be described through detailed illustration of embodiments referring to the drawings.
Fig. 1 is a perspective view of a sprayer according to a first embodiment.
Fig. 2 is an exploded view of the sprayer shown in Fig. 1.
Fig. 3 is a cross-sectional view of the sprayer shown in Fig. 1.
Fig. 4 is a perspective view of the sprayer shown in Fig. 1 at an early stage of installing a detachable rechargeable battery.
Fig. 5 is a perspective view of a vehicle washed with water provided by the sprayer shown in Fig. 1.
Fig. 6 is a perspective view of the sprayer in another position than shown in Fig. 1.
Fig. 7 is a perspective view of a sprayer according to an embodiment of the present invention.
Fig. 8 is an exploded view of the sprayer shown in Fig. 7.
Fig. 9 is a cross-sectional view of the sprayer shown in Fig. 7.
Fig. 10 is a perspective view of a detachable rechargeable battery for the sprayer shown in Fig. 7.
Fig. 11 is a perspective view of a sprayer according to another embodiment of the present invention.
Fig. 12 is an exploded view of the sprayer shown in Fig. 11.

### DETAILED DESCRIPTION OF EMBODIMENTS

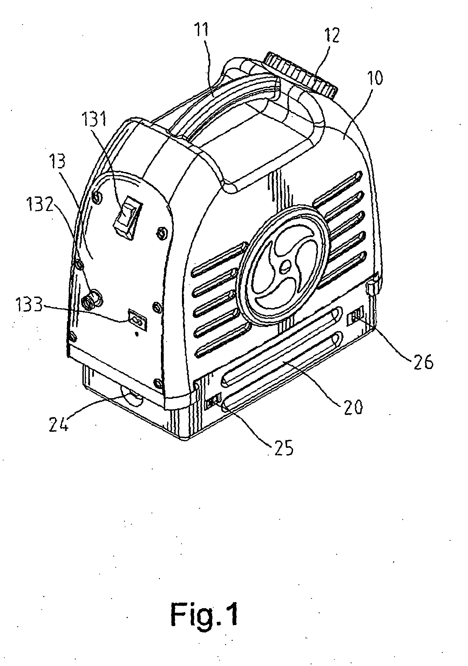

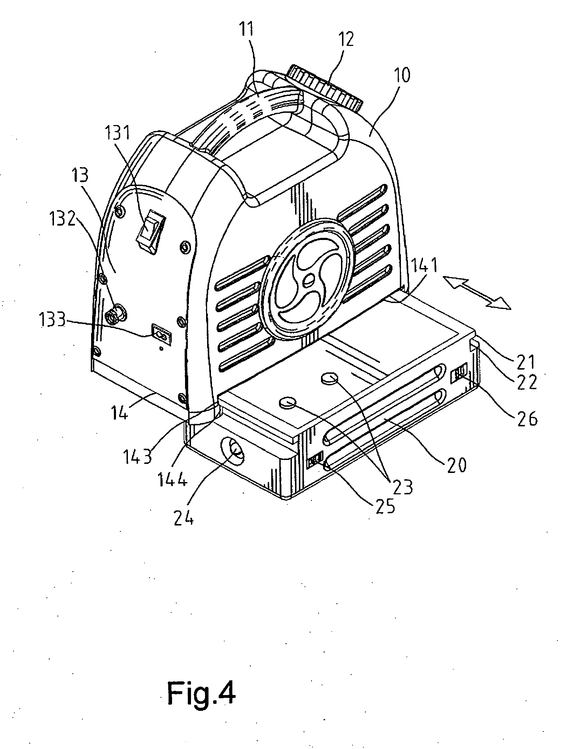

Referring to Figs. 1 through 5, there is shown a sprayer according to a first embodiment. The sprayer includes a container 10 and a battery 20 for energizing the sprayer. The battery 20 is a rechargeable battery. The battery 20 can be attached to and detached from the container 10.

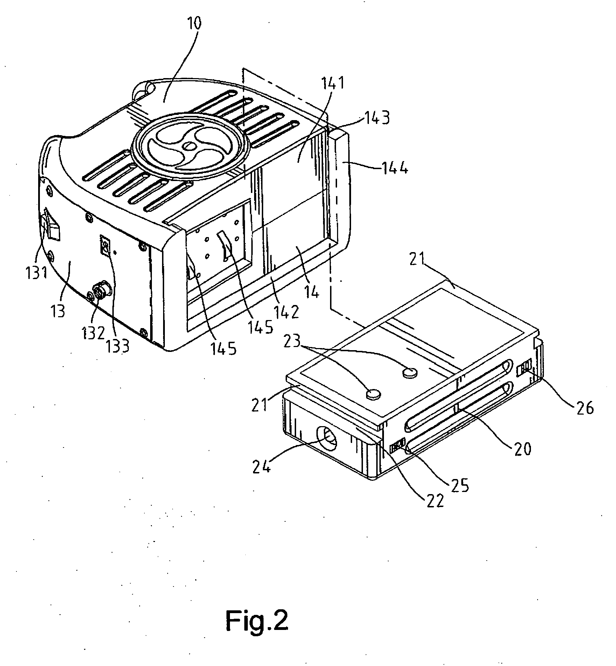

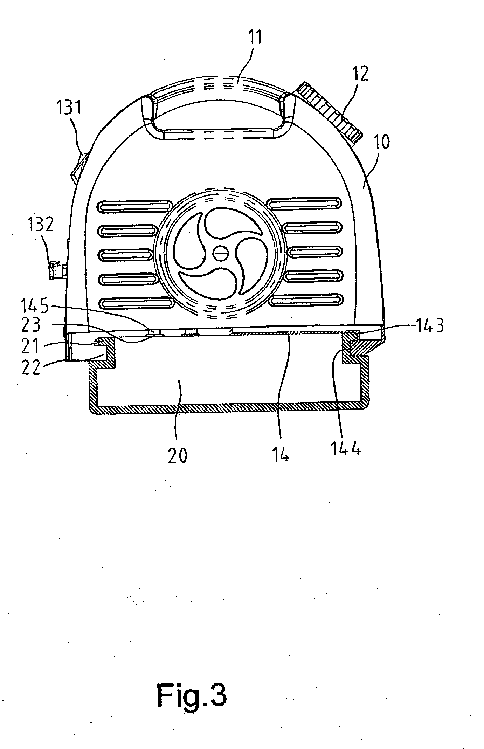

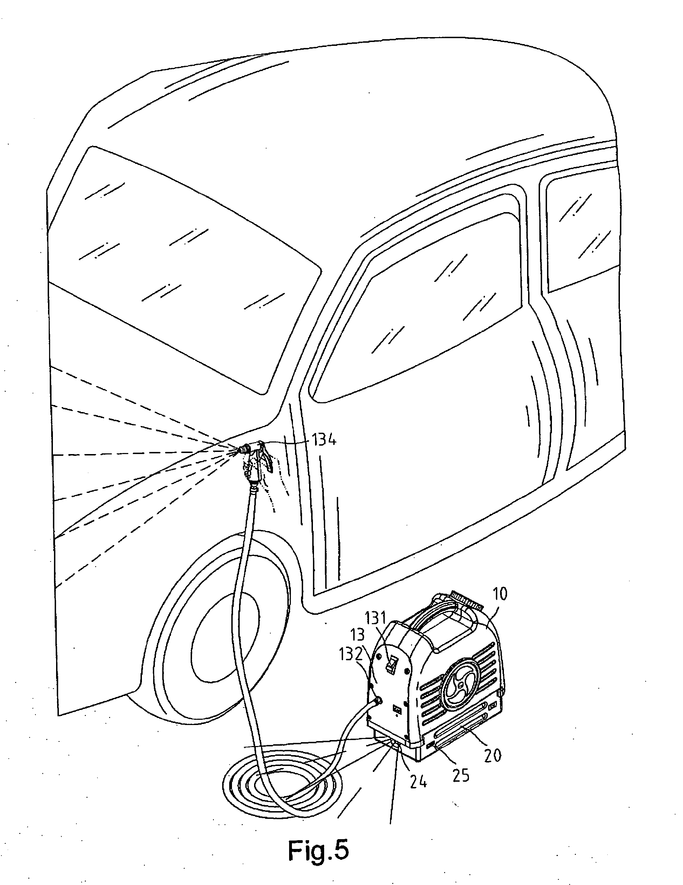

Referring to Figs. 2 and 3, the container 10 is used to contain water. The container 10 includes a handle 11 formed on the top so that a user can easily hold the container 10 by the handle 11. The container 10 can be filled with water through an aperture defined therein. There is a cover 12 for closing the aperture. A panel 13 is installed on a side of the container 10. A switch 131, a joint 132 and a socket 133 are installed on the panel 13. The switch 131 is operable to turn on and off the sprayer. The joint 132 can be connected to a hose that leads to a nozzle 134 (see Fig. 5). The socket 133 can receive a plug installed at an end of a cord that includes another plug for insertion in a socket of a power supply. Also positioned in the container 10 are elements such as a pump and a motor. These elements are not shown for being conventional.

The container 10 includes two tracks 144 formed on the bottom and a restraint 142 formed between the tracks 144. The tracks 144 extend parallel to each other and the panel 13. The restraint 142 extends perpendicular to the tracks 144. A space 14 is defined by the tracks 144 and the restraint 142. The space 14 includes an opening 141 opposite to the restraint 142. Each of the tracks 144 defines a groove 143 so that the grooves 143 face each other. Two elastic contacts 145 are installed on the bottom of the container 10. The elastic contacts 145 are electrically connected to the switch 131.

The battery 20 includes two flanges 21 extending parallel to each other and two grooves 22 each near a related one of the flanges 21. Two contacts 23 are installed on the top of the battery 20.

The flanges 21 are located in the grooves 143, and the grooves 22 receive the tracks 144 so that the battery 20 is located in the space 14 and that the contacts 23 contact the elastic contacts 145. The restraint 142 is used to restrain the battery 20.

The flanges 21 can be moved from the grooves 143, and the tracks 144 can be moved from the grooves 22 so that the battery 20 is detached from the container 10.

A light 24, a switch 25 and a socket 26 are installed on the battery 20. The light 24 is used to illuminate when the sprayer is used in the dark. The switch 25 is operable to turn on and off the light 24. The socket 26 is electrically connected to a transformer provided in the battery 20 so that the socket 26 provides electricity at 110 volts to various appliances.

Referring to Fig. 5, the sprayer is used to sprayer water for washing a vehicle. A user can easily move the sprayer around the vehicle while washing the vehicle since the sprayer is not connected to the vehicle through a cord. The sprayer can be used in places distant from the vehicle since the sprayer is not connected to the vehicle through a cord.

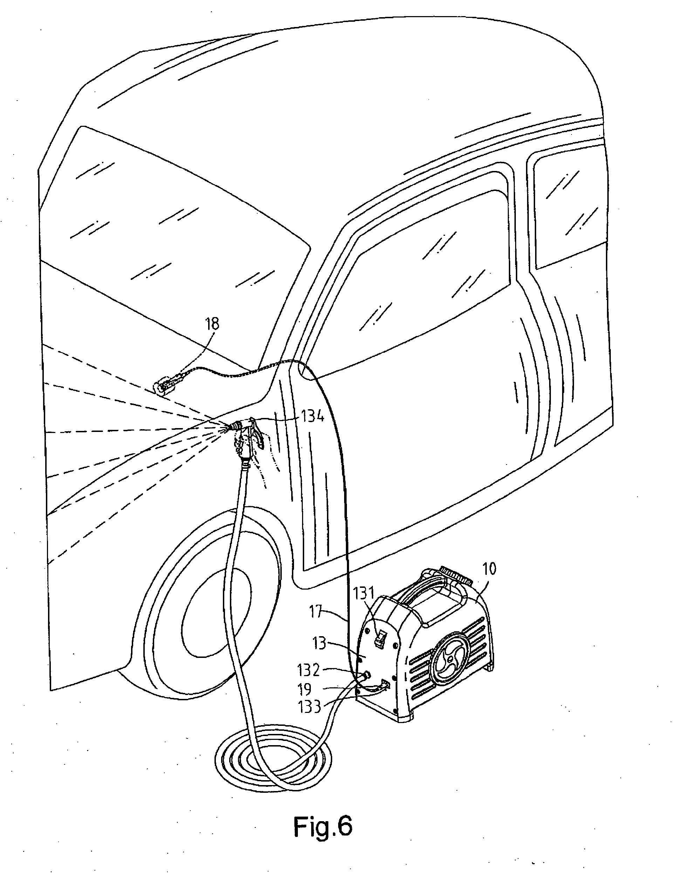

Referring to Fig. 6, a vehicle is washed with water sprayed from the sprayer. The sprayer is energized by a power supply of the vehicle via a cord 17. The cord 17 is provided with a plug 18 at an end and a plug 19 at another end. The plug 18 is inserted in a socket of the power supply of the vehicle. The plug 19 is inserted in the socket 133. In this case, the battery 20 can be taken from the sprayer.

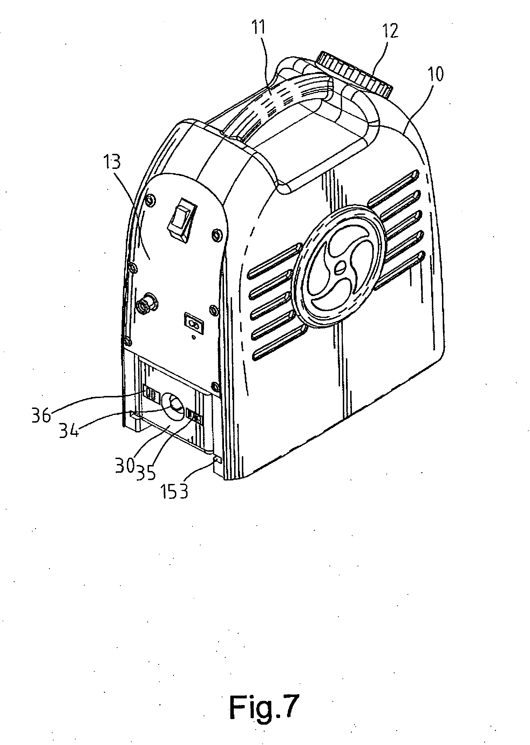

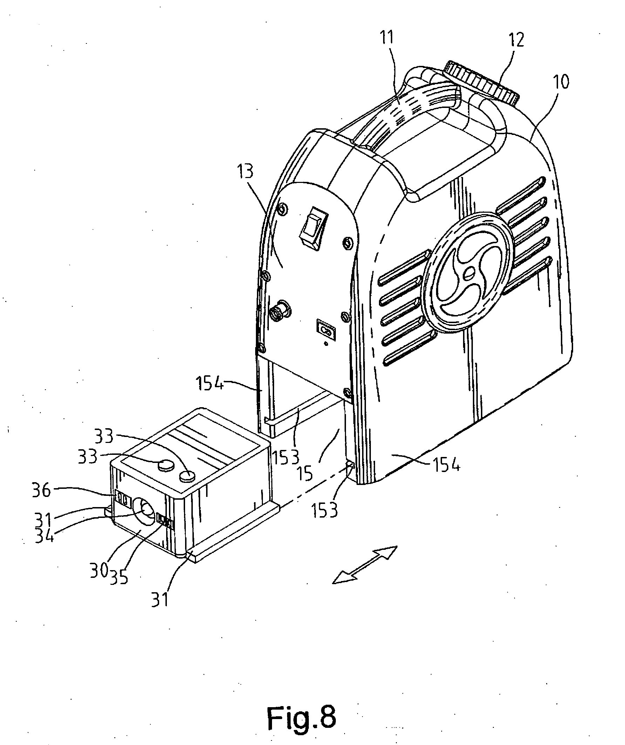

Referring to Figs. 7 through 10, there is shown a sprayer according to an embodiment of the present invention. The embodiment is like the first embodiment except a few things. Firstly, there are two tracks 154 instead of the tracks 144. The tracks 154 are like the tracks 144 except extending perpendicular to the panel 13. Each of the tracks 154 defines a groove 153. Secondly, there is a restraint 152 instead of the restraint 142. The restraint 152 is like the restraint 142 except extending parallel to the panel 13. Thirdly, the tracks 154 and the restraint 152 define a space 15 instead of the space 14 defined by the tracks 144 and the restraint 142. The space 15 includes an opening 151 located below the panel 13. Fourthly, there are two elastic contacts 155 instead of the elastic contacts 145. The elastic contacts 155 are at different positions from that of the elastic contacts 145. Fifthly, there is a battery 30 instead of the battery 20. The battery 30 includes two flanges 31, two contacts 33, a light 34, a switch 35 and a socket 36. The light 34, the switch 35 and the socket 36 are formed on the front of the battery 30.

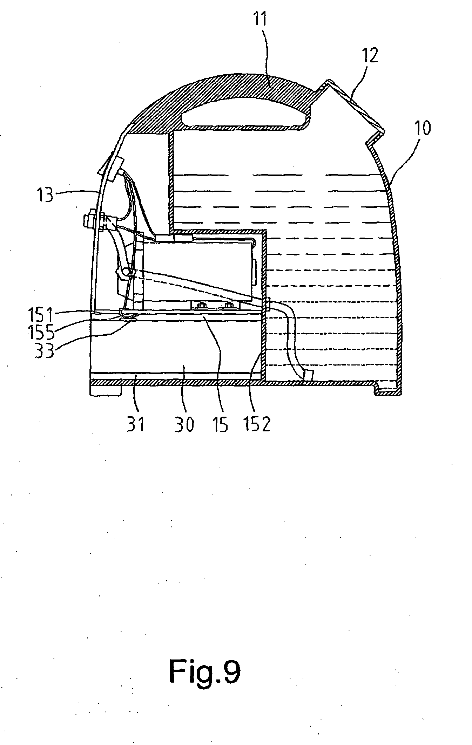

Referring to Fig. 9, the flanges 31 are located in the grooves 153 so that the battery 30 is located in the space 15 and that the contacts 33 contact the elastic contacts 155.

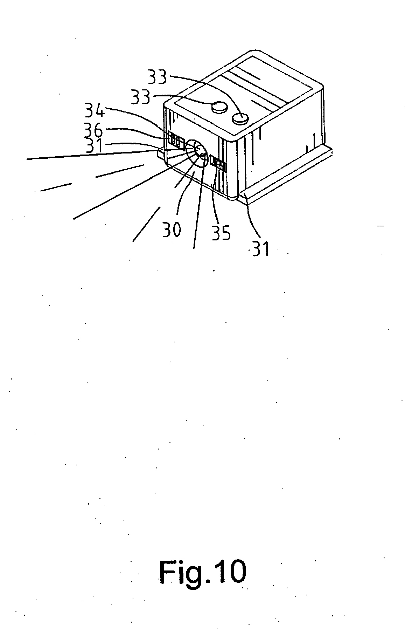

Referring to Fig. 10, the battery 30 is detached from the container 10. The battery 30 equipped with the light 34 can be used as a flashlight.

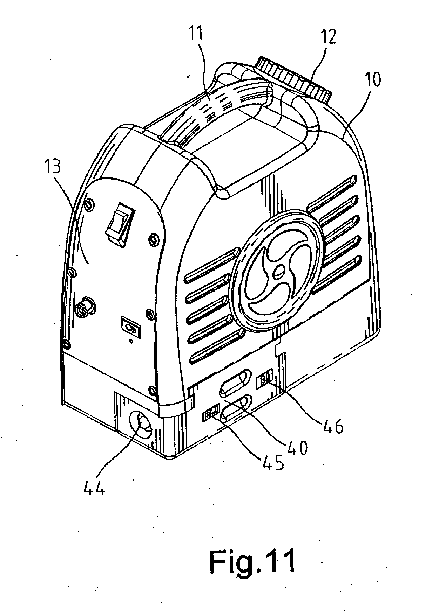

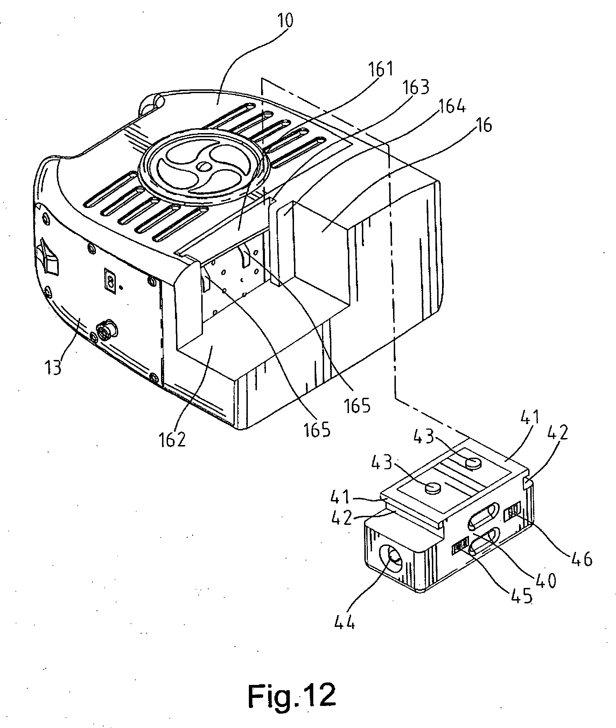

Figs. 11 and 12 show a sprayer according to another embodiment of the present invention. The third embodiment is like the first embodiment except a few things. Firstly, there are two tracks 164 instead of the tracks 144. Each of the tracks 164 defines a groove 163. Secondly, there is a restraint 162 instead of the restraint 142. Thirdly, there is a space 16 located below the tracks 164 instead of the space 14 located above the tracks 144. The space 16 includes an opening 161. A cross-sectional area of the space 16 is about one fourth of the area of the bottom of the container 10. Fourthly, there are two elastic contacts 165 instead of the elastic contacts 145. Fifthly, there is a battery 40 instead of the battery 20. The battery 40 includes two flanges 41, two grooves 42, two contacts 43, a light 44, a switch 45 and a socket 46.

The flanges 41 are located in the grooves 163 while the grooves 42 receive the tracks 164 so that the battery 40 is positioned in the space 16 and that the contacts 43 contact the elastic contacts 165.

The sprayer of the present invention exhibits several advantages. Firstly, it can be used both near and far from a vehicle for using the battery. Secondly, it can energize various appliances since the socket 26 provides electricity at 110 volts. Thirdly, batteries of various sizes can be located in various positions of the container.

A vehicle is washed with water sprayed from a sprayer according to an embodiment of the present invention.

The present invention has been described via the description of the embodiments. Those skilled in the art can derive variations from the embodiments without departing from the scope of the present invention. Therefore, the embodiments shall not limit the scope of the present invention defined in the claims.

## Claims

1. A sprayer comprising:
a container (10) for containing water, the container comprises two tracks (154,164) formed thereon; and
a battery (30, 40) comprising two contacts (33,43) formed thereon and two flanges (31,41),
**characterized in**
**that** the container, (10) comprises two elastic contacts (155,165) installed thereon and
a space (15,16) for receiving the battery (30, 40) defined by the tracks (154,164) and a restraint (152,162) between the tracks for restraining the battery (30,40), wherein each of the tracks (154,164) defines a groove (153,163) for receiving a related one of the flanges (31,41),
wherein the flanges (31,41) for engagement with the tracks (154,164) are located in the grooves (153,163) so that the battery (30,40) is attached to the container (10) and positioned in the space (15,16) and that the contacts (33,43) of the battery (30, 44) contact the elastic contacts (155,165) of the container (10).

2. A sprayer according to claim 1, wherein the flanges (31) are located near the bottom of the battery (30).

3. A sprayer according to claim 1, wherein the flanges (41) are located near the top of the battery (40).

4. A sprayer according to claim 1, wherein the battery (40) comprises two grooves (42) for receiving the tracks (164).

5. A sprayer according to claim 1, wherein the space (16) comprises a cross-sectional area being substantially one fourth of that of the bottom of the container (10).

6. A sprayer according to claim 1, wherein the battery (30, 40) comprises a light (34, 44) installed thereon.

7. A sprayer according to claim 6, wherein the battery (30, 40) comprises a switch (35,45) operable thereon for turning on and off the light (34,44).

8. A sprayer according to claim 1, wherein the battery (30,40) comprises a socket (36,46) installed thereon for providing electricity at 110 volts.

## Patentansprüche

1. Ein Zerstäuber, aufweisend:
einen Behälter (10) zum Aufnehmen von Wasser, wobei der Behälter zwei Führungen (154, 164) aufweist, die an diesem ausgebildet sind, und
eine Batterie (30, 40), die zwei an dieser ausgebildete Kontakte (33, 43) und zwei Flansche (31, 41) aufweist,
**dadurch gekennzeichnet, dass**
der Behälter (10) aufweist: zwei daran installierte elastische Kontakte (155, 165) und
einen Raum (15, 16) zum Aufnehmen der Batterie (30, 40), der durch die Führungen (154, 164) und eine Halteeinrichtung (152, 162) zwischen den Führungen zum Halten der Batterie (30, 40) definiert ist,
wobei jede der Führungen (154, 164) eine Nut (153, 163) zum Aufnehmen eines jeweiligen der Flansche (31, 41) definiert,
wobei die Flansche (31, 41) zum Eingreifen in die Führungen (154, 164) in den Nuten (153, 163) positioniert sind, so dass die Batterie (30, 40) an dem Behälter (10) angebracht und in dem Raum (15, 16) positioniert ist, und dass die Kontakte (33, 43) der Batterie (30, 40) die elastischen Kontakte (155, 165) des Behälters (10) kontaktieren.

2. Ein Zerstäuber gemäß Anspruch 1, wobei die Flansche (31) in der Nähe der Unterseite der Batterie (30) positioniert sind.

3. Ein Zerstäuber gemäß Anspruch 1, wobei die Flansche (41) in der Nähe der Oberseite der Batterie (40) positioniert sind.

4. Ein Zerstäuber gemäß Anspruch 1, wobei die Batterie (40) zwei Nuten (42) zum Aufnehmen der Führungen (164) aufweist.

5. Ein Zerstäuber gemäß Anspruch 1, wobei der Raum (16) eine Querschnittsfläche aufweist, die im Wesentlichen ein Viertel der Fläche der Unterseite des Behälters (10) beträgt.

6. Ein Zerstäuber gemäß Anspruch 1, wobei die Batterie (30, 40) ein daran installiertes Licht (34, 44) aufweist.

7. Ein Zerstäuber gemäß Anspruch 6, wobei die Batterie (30, 40) einen Schalter (35, 45) aufweist, der daran betätigbar ist, um das Licht (34, 44) ein- und auszuschalten.

8. Ein Zerstäuber gemäß Anspruch 1, wobei die Batterie (30, 40) eine Anschlussdose (36, 46) aufweist, die daran installiert ist, um Elektrizität mit 110 Volt bereitzustellen.

## Revendications

1. Pulvérisateur comprenant :
un récipient (10) pour contenir de l'eau, le récipient comprenant deux rails (154, 164) formés sur celui-ci ; et
une batterie (30, 40) comprenant deux contacts (33, 43) formés sur celle-ci et deux rebords (31, 41),
**caractérisé en ce que** :
le récipient (10) comprend deux contacts élastiques (155, 165) installés sur celui-ci, et
un espace (15, 16) pour recevoir la batterie (30, 40) défini par les rails (154, 164) et un dispositif de retenue (152, 162) entre les rails pour retenir la batterie (30, 40), dans lequel chacun des rails (154, 164) définit une rainure (153, 163) pour recevoir un rebord relatif des rebords (31, 41),
dans lequel les rebords (31, 41) pour la mise en prise avec les rails (154, 164) sont positionnés dans les rainures (153, 163) de sorte que la batterie (30, 40) est fixée sur le récipient (10) et positionnée dans l'espace (15, 16) et que les contacts (33, 43) de la batterie (30, 40) sont en contact avec les contacts élastiques (155, 165) du récipient (10).

2. Pulvérisateur selon la revendication 1, dans lequel les rebords (31) sont positionnés à proximité du fond de la batterie (30).

3. Pulvérisateur selon la revendication 1, dans lequel les rebords (41) sont positionnés à proximité de la partie supérieure de la batterie (40).

4. Pulvérisateur selon la revendication 1, dans lequel la batterie (40) comprend deux rainures (42) pour recevoir les rails (164).

5. Pulvérisateur selon la revendication 1, dans lequel l'espace (16) comprend une surface transversale qui représente sensiblement un quart de celle du fond du récipient (10).

6. Pulvérisateur selon la revendication 1, dans lequel la batterie (30, 40) comprend une lumière (34, 44) installée sur celle-ci.

7. Pulvérisateur selon la revendication 6, dans lequel la batterie (30, 40) comprend un interrupteur (35, 45) pouvant fonctionner sur celle-ci afin de mettre en marche ou d'arrêter la lumière (34, 44).

8. Pulvérisateur selon la revendication 1, dans lequel la batterie (30, 40) comprend une prise (36, 46) installée sur celle-ci pour fournir de l'électricité à 110 volts.
